# EUROPEAN PATENT SPECIFICATION

(11) **EP 1 027 939 B1**
(45) Date of publication and mention of the grant of the patent: **28.09.2005**
(21) Application number: 00200383.8
(22) Date of filing: 04.02.2000
(51) Int. Cl.: B09C 1/06, B09C 1/02

(54) **Process for removing organic and/or inorganic micropollutants from mud, in particular from sea and lagoon sediments, or from soil**
Verfahren zum Entfernen von organischen und/oder anorganischen Mikroverunreinigungen aus Schlamm, insbesondere aus Meeres- und Lagunensedimenten oder aus Boden
Procédé pour enlever des micro-polluants organiques et/ou inorganiques de boues, en particulier de sédiments marins et lagunaires, ou de sols

(30) Priority: 05.02.1999 IT MI990224
(43) Date of publication of application: 16.08.2000
(73) Proprietor: SNAMPROGETTI S.p.A., 20097 San Donato Milanese (MI) (IT)
(72) Inventor: Cozzolino Ciro, I-61032 Fano (Pesaro) (IT); Miglio Roberta, I-28047 Oleggio (Novara) (IT); Greganti Savio, I-60017 Marzocca (Ancona) (IT); Volpe Luigi, I-60129 Ancona (IT)
(74) Representative: De Gregori, Antonella

(56) References cited:
- EP-A- 0 524 463
- EP-A- 0 853 986
- WO-A-90/06820
- WO-A-90/11475
- STEGMANN, R. ET AL: "Übersicht über die verfügbaren Verfahren zur Bodenreinigung" BERICHTE AUS WASSERGÜTE- UND ABFALLWIRTSCHAFT, no. 108, 1991, pages 39-52, XP002116094 MÜNCHEN
- MÜLLER, G.: "Decontamination of Dredged Materials and Sludges Enriched in Heavy Metals" RECYCLING IN CHEMICAL WATER AND WASTEWATER TREATMENT. SCHRIFTENREIHE ISWW KARLSRUHE, vol. 50, 1986, pages 237-243, XP002116095 KARLSRUHE
- BOLIER, D.: "Combinatie van technieken is toekomst grondreiniging" LAND + WATER/ MILIEUTECHNIEK., vol. 31, no. 5, May 1991 (1991-05), pages 96-97+99, XP000218270 MILIEU PERS, OISTERWIJK., NL ISSN: 0926-8456

## Description

The present invention relates to an industrial process for the detoxification of mud, in particular sea and lagoon sediment and dredging mud, or earth contaminated by persistent organic micropollutants (for example, dioxines and furans (PCDD/F), polychlorobiphenyls (PCB), aromatic polycyclic hydrocarbons (IPA)) and inorganic micropollutants (for example, Hg, Cr, Cu, Zn, Pb, As, Cd, etc.).

Risks for the health of both man and the environment associated with the presence of halogenated organic compounds, mainly dioxines, furans and polychlorobiphenyls or heavy metals such as Hg, Cu, Cr, Zn, Pb, As, Ni, Cd are known and documented. Chlorinated and brominated organic micropollutants have proved to be persistently present in the environment, causing accumulation phenomena and generating sites with decisively high contamination levels.

The most widely used procedure up until now for reducing the contamination effects of lagoon and sea sediment consists in dredging and the final depositing of the dehydrated and possibly stabilized materials in controlled dumps; this method of disposal is becoming more and more impracticable owing to the increasing difficulties in finding adequate space and in addition the problem is not definitely solved but is transferred to areas where pollution causes less damage.

It is therefore necessary to have technologies for the removal of these pollutants.

The processes used are selected in each individual case and adapted to the specific situation.

The selection of the various operating alternatives is generally based on the choice of technology which enables the recovery objectives to be reached, has the best engineering and economic guarantees and causes as little impact as possible on the environment, a factor which is of greatest interest to the local inhabitants.

Numerous methods for removing organic and inorganic micropollutants from contaminated mud are described in the known art and generally fall into the following categories.

### Biological treatment

Methods of biological treatment consist in degradation of the contaminants on the part of microorganisms. The biological activity leads to the transformation and detoxificaton of the substances originally present in the mud. WO-95/22374 of British Nuclear Fuels describes the removal of metal species by means of sulfuric acid produced microbiologically.

In the case of organic micropollutants such as PCDD/F, IPA and PCB, the biological treatment requires the accurate selection of specific biomasses capable of metabolizing these particular substrates; the purifying capacity is in any case limited due to the intrinsic toxicity of these compounds and also to their low solubility in water and affinity for the humic substances present in mud.

The contemporaneous presence of organic and inorganic micropollutants in mud makes it always necessary to foresee a sequence of distinct phases of biological treatment.

The biological treatment processes applied to these complex matrices are characterized by slow kinetics, they have limited possibilities of control and have a poor purifying capacity.

### Inertization treatment

Inertization is a decontamination process applied on matrices of a prevalently inorganic nature which, as a result of physical phenomena and chemical reactions, causes the solidification and stabilization of the contaminated material, by englobing the toxic components contained therein which become fixed and immobilized in the solid mass. Inertization by hydraulic ligands and additives accelerating seizure phenomena is a process widely applied for immobilizing heavy metals contained in residual fly ash from thermotreatment processes of waste, as described for example in IT-21560 A/89 of the same applicant.

Solid end-residues have a weight which is about the double of the original material, with a consequent effect on the final disposal costs in controlled dumps.

An alternative to disposal in dumps consists of the possibility of producing end-products for urban use with a considerable increase, however, in the operating costs.

The inertization processes described above have proved to be inadequate and not very efficient in the case of the immobilization of pollutants of an organic nature.

### Extraction and washing treatment

This treatment is based on the extraction with chemical or physical means of harmful substances using mechanical energy and suitable fluids and additives for the washing.

Extraction techniques allow various types of organic contaminants to be removed: oils, cyanides, aromatic polycyclic hydrocarbons and heavy metals.

The subsequent treatment of the extraction solvents and residual traces of solvent in the material treated, however, is generally trying. The extraction of heavy metals such as Cu, Fe and Pb by acid attack is described for example in US-5476994 of Greenfield Environmental and in EP-853986 of Procter & Gable.

### Thermal treatment

Thermal treatment eliminates the contaminants by the direct or indirect heating of mud. The thermotreatment can be carried out in an oxidating environment, or without air; in the first step of the process the humidity and most volatile organic compounds are evaporated. The volatilization and/or pyrolysis of the heavier organic compounds takes place at higher temperatures (300-600°C). The volatilized contaminants are then completely oxidized with a thermodestruction process carried out in an excess of oxygen at temperatures ranging from 850-1200°C (post-combustor), depending on their nature.

At the basis of thermotreatment processes is a full knowledge of the physico-chemical characteristics of the raw material; this determines the project characteristics of the plant: dimensions, operating temperatures, residence times and type of blasting of the gaseous effluents.

A thermal treatment process to remove organic substances from contaminated materials is described for example in WO-90/11475 of I.T. Corporation.

Inorganic compounds such as heavy metals are evidently not destroyed in the combustion and are found as residues in fly ash and in residual liquid effluents from treatment processes of combustion fumes.

### Vitrification treatment

When the mud is contemporaneously contaminated by various groups of pollutants, it is generally necessary to apply several decontamination technologies. To detoxify mud from substances of an organic and inorganic nature, a treatment must be selected which is suitable for removing the organic substances, such as for example thermal or extraction treatment, and a treatment suitable for eliminating the toxicity due to the presence of heavy metals, such as for example stabilization, innocuization, inertization processes.

The two types of treatment are combined in the vitrification process which, by bringing the raw material to a temperature higher than the softening point (1100-1300°C), contemporaneously produces the incineration of the organic substances and the stabilization of the inorganic fraction to an inert mass of a vitreous consistency. The process therefore allows the complete decomposition of the organic fraction together with the contemporaneous inertization of the inorganic part as described for example in DE-3827086. The vitrification process has a high energy consumption, it does not enable the treated materials to be returned to their original sites, but only to controlled dumps, and in the treatment phase of the combustion gases there are residues of liquid effluents contaminated by heavy metals.

Further examples are disclosed in the article "Ubersicht uber die verfugbaren Verfahren zur Bodenreinigung" - R. Stegmann et al. - Berichte aus Wassergute und Abfallwirtschaft - N. 108, 1991, pages 39-52, XP002116094, Muenchen, taking into consideration methods available for soil decontamination such as thermal methods, washing methods (comprising also the extraction method), method for aspiration of air from the soil and biological methods.

EP-A-0524463 discloses a process for the thermal treatment of polluted soil where the excavated soil is heated in a rotary drum by indirect heat exchange at a maximum of 650°C in the absence of oxygen.

The article "Decontamination of Dredged Materials and Sludges Enriched in Heavy Metals" - G. Muller" discloses a process based on an extraction of heavy metals by treating the sediments with acids, a removal of the solvents and repeated washing of the solids, a precipitation of the heavy metals in the acidic solution with calcium hydroxide and a subsequent elimination of residual concentrations of cadmium and other heavy metals still in.

An integrated process scheme has now been found which, by combining thermal desorption with the solubilization of heavy metals by chemical attack, produces a sediment which is completely detoxified from organic and inorganic pollutants, that can be returned to its original site, fumes purified on a level of the best technology available, chemically inert and stable solid residues and no liquid effluent.

The present invention consists in completely eliminating contamination due to organic micropollutants (for example, PCDD/F, PCB, IPA) and inorganic micropollutants (for example Hg, Cr, Cu, Zn, Pb, As) from lagoon and sea sediment and dredging mud, at the same time making it possible to return the materials treated to their original sites.

The process is extremely versatile and enables contaminated mud to be treated for the contemporaneous presence of organic and inorganic material as well as organic material alone or inorganic material alone.

From an economic point of view, the process offers the advantage, with respect to traditional incineration, of effecting the thermal treatment at much lower temperatures, 450-max 700°C, against 850-1000°C, and of generating a reduced volume of fumes to be purified (as a result of indirect heat), with a consequent reduction in the dimensions of the whole equipment.

The greatest advantage of the process however, is the limited environmental impact, as it has been so conceived as to allow, in addition to a lower volume of fumes emitted, by operating at low temperatures, the natural characteristics of the solid matrices to remain unaltered, consequently enabling them to be returned to the original sites.

The sediment produced is the same as it was originally, (mud and not a block of cement or vitrified product), but completely detoxified from organic and inorganic pollutants.

No liquid efflents are generated by the process; a stream of inert solids remains, in which the toxic metals separated from the original sediment/mud, according to an inertization process already patented by the appliant (IT-21560 A/89) are stably immobilized in a cement matrix.

The process of the present invention for the decontamination of mud or earth from organic and/or inorganic micropollutants comprises a thermal desorption from the mud or earth of organic micropollutants and volatile metals in an oven at a temperature ranging from 300 to 700°C, obtaining a gaseous stream containing the organic pollutants and volatile metals removed and a residual solid stream; characterised in that said thermal desorption is followed by an extraction of the heavy metals from the residual solid stream by means of inorganic acids or kelating compounds in aqueous solution, in one or more steps, by chemically dissolving said heavy metals, obtaining substantially detoxified mud or earth having such characteristics as to enable it to be replaced in the original site.

The process of the present invention may also comprise known traditional process operations, recommended for completing the decontamination cycle, such as:
- thermal drying of the materials to be treated;
- post-combustion of the desorbed gases/purification of the combustion fumes;
- clariflocculation treatment for the precipitation of the metals in liquid phase;
- dehydration treatment of the process mud;
- inertization treatment of the fine powders and process mud.

Let us examine where and how these steps can be inserted into the present process.

The thermal desorption can be preceded by a thermal drying step, preferably effected by indirect heating or using diathermic oil or vapour, to concentrate the mud or earth to a dry residue of at least 80% by weight.

The thermal drying can be followed by a single sieving and/or crushing step.

The gaseous stream containing organic pollutants and volatile metals generated by the thermal desorption is subjected to post-combustion thermal treatment followed by dedusting and deacidification and optionally demercurization treatment.

A thermal recovery and/or rapid cooling (quenching) of the fumes with water may follow immediately downstream of the post-combustion treatment.

The process described above may also comprise an additional step to treat the water coming from the extraction step of the heavy metals and drying, deacidification steps, when present, and aqueous effluents of the process itself, obtaining process water which is completely recirculated, and resulting mud, in which heavy metals are concentrated, which can optionally be sent for inertization treatment, preferably together with the powders generated by the dedusting treatment.

The demercurization treatment can be carried out in a damp scrubber in which the outgoing aqueous stream contaminated by mercury is sent directly to the water treatment step or is subjected to specific demercurization treatment in which an aqueous stream is generated, which is recirculated to the extraction step of the heavy metals, together with a solid stream containing mercury.

The modular conception of the plant allows the processing of various types of charges with different concentrations of pollutants excluding some of the steps described, as in the case of the thermal drying step which can be omitted in the case of treatment of sediment characterized by a low degree of humidity.

The various steps are illustrated hereunder in more detail.

The thermal treatment can be carried out in a rotating drum oven heated indirectly and run at lower temperatures than the typical incineration value, normally between 300 and 700°C and preferably between 400 and 650°C. In this way the organic components are released as vapours and depending on their nature and O₂ content in the reagent atmosphere, they can either pass unaltered into the post-combustion chamber or partly as pyrolyzed products or as combustion gas. The carrying gas (nitrogen, air, diluted air or part of the gas generated by the heating of the desorber) is preferably fed at a relatively low flow-rate, in order to produce a linear gas rate of 2-50 cm/sec, sufficient for moving the desorbed vapours and minimizing the entrainment of fine powders. The length and rotation rate of the oven is regulated so as to produce residence times of the material to be treated preferably ranging from about 20 minutes to 90 minutes depending on the type of conditioning that the material has already undergone (particle size) and the degree of contamination.

Operating with indirect heating the heating stream is kept separate from the stream generated by desorption, thus minimizing the costs relating to the thermal level and requirements associated with the treatment of off-gases.

The fumes produced for the heating are clean and do not require further purification; in addition if used in a thermal recovery step, they considerably reduce problems of interference with the equipment materials.

The pollutants contained in the charge, such as for example dioxines (PCDD), furans (PCDF), polychlorobiphenyls (PCB, aromatic polycyclic hydrocarbons (IPA) and mercury are thermally desorbed producing a gaseous stream (fumes) and a solid stream purified of organic pollutants and volatile metals.

The gaseous stream can be subjected to further thermal treatment (post-combustion) for the complete destruction of the organic compounds, followed by an energy recovery section by means of diathermic oil which is used for transferring the heat in the thermal drying phase of the mud; immediately downstream of the thermal recovery section, a rapid quenching step with water inhibits potential reformation phenomena of dioxines and furans.

For the final purification of the combustion fumes a phase sequence can be included: filtration of the powders and washing of the fumes on an acid-base double circuit column.

Perfectly clean fumes are emitted from the end-stack guaranteeing respect for the limits which are much stricter than those imposed by European and international regulations.

The mercury is concentrated in the liquid effluent coming from the washing of the fumes as a result of condensation phenomena; this effluent can be subjected to specific demercurization treatment according to the known processes: precipitation with the help of sulfurated compounds or capturing on beds of selective resins or active carbon. The demercurized effluent is entirely re-used, as process water, in the extraction step for the solubilization of the metals.

The solid stream resulting from the thermal desorption process and containing, at this point, only heavy metals, can be subjected to an extraction process for the solubilization of the metals by chemical attack effected by the applicant.

The extraction of the metals can take place in reactors/tanks of the complete mixing type in which the leaching aqueous solution is kept in contact with the mud for a set time, which in relation to the particle size of the materials preferably varies from 1 to 20 hours, more preferably from 1 to 4 hours.

Preferred acids are HCl and H₂SO₄; HNO₃ and also a mixture of HCl and HNO₃ are equally suitable, as well as neutral solutions containing kelating compounds, such as for example EDTA or citrates.

The selection of the reagent is mainly linked to the type and levels of the heavy metals which are present. In particular, for example, it has been observed that when Zn, Cr, Cu, As, Ni, Pb, Cd are contemporaneously present, HCl is the most suitable acid; H₂SO₄ is more effective than HCl in the removal of Ni, Zn and Mn, but is practically ineffective with respect to Pb. Kelating compounds such as EDTA, in particular pH ranges, are more effective than acids in removing some bivalent heavy metals, such as for example Pb, but complicate the water treatment section for the reprecipitation phase of the metals and recovery of the EDTA. If contamination by heavy metals is selectively linked to the presence of Cr, the removal is much more effective if a preliminary oxidation step in aqueous phase with H₂O₂ is introduced, followed by acid treatment.

Once the most suitable reagent for the type of contamination of the charge has been selected, the liquid/solid ratio, regulated on the basis of the removal objective to be reached, may preferably vary within the range of 3-10, more preferably between 4 and 8: the higher the ratio, the greater will be the removal effect that can be achieved.

The aqueous solution in which the metals have been dissolved can be separated by decanting from the solid and sent to a specific conventional physico-chemical treatment unit for the reprecipitation/concentration of the metals in the form of mud.

The solid is preferably subjected to washing to move the dissolved metals which remain in the imbibition water of the mud itself; water recirculated from the reprecipitation process of the metals is used for the purpose.

The solid residue dehydrated and decontaminated from both organic micropollutants (by thermal desorption) and heavy metals (by extraction with chemical attack), after neutralization, can be recycled to the sites of origin or it can be sent for definitive disposal to controlled dumps for inert materials or, at the most, for special waste products.

As already specified, the water treatment step of the present process, for both the reprecipitation of the metals extracted from the contaminated solids and for the treatment of the condensation water of the drier, together with the demercurization section of the effluents coming from the combustion fume washing column, comprises well-known conventional physico-chemical treatment.

The absence of liquid effluents is of great importance, in the claimed process: in fact all the water treated in the extraction section of heavy metals and in the cooling and final purification section of the combustion fumes, is entirely recycled.

The mud resulting from the treatment of the liquid effluents is in a form which is suitable for thermal treatment to recover the relatively pure heavy metals for recycling or, together with the powders collected from the dedusting device, it can be sent to a specific inertization plant whose treatment process has already been patented by the applicant.

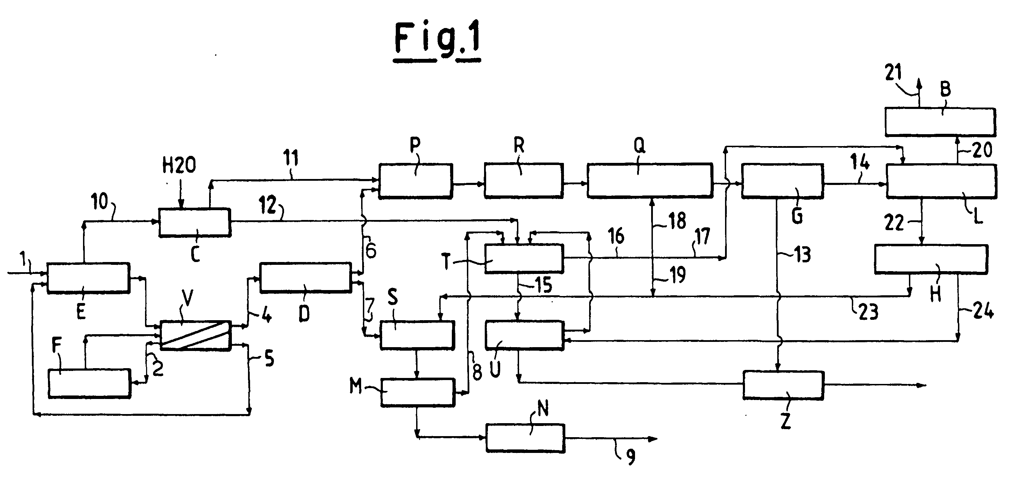

A preferred embodiment of the invention is illustrated hereunder with the help of figure 1, which, however, should in no way be considered as restricting the scope of the invention.

The contaminated mud (1) is sent for thermal drying (E) effected indirectly using diathermic oil or vapour, then for sieving (V) from where the middle sieved product (4) is sent to the thermal desorption step in a rotating drum oven with indirect heating (D); the upper sieved product (2) is sent for crushing (F) and is then reintroduced into (V) whereas the lower sieved product (5) is recycled to the head of the drier (E) to control and regulate the degree of humidity of the contaminated mud in the feeding.

A gaseous stream (6) containing the organic pollutants and removed volatile metals, leaves step (D) together with a residual solid stream (7) which is sent to the extraction step (S) in which the heavy metals contained therein are chemically dissolved, followed by dehydration (M) for the separation of the excess water (8) from the residual solid stream and neutralization (N) to obtain decontaminated, stable mud (9).

The fumes (10) from the drying step (E) are partially condensed in (C) obtaining a gaseous stream (11) and an aqueous stream (12).

The gaseous stream (11) is sent to a post-combustion chamber (P) (to which the gaseous stream (6) leaving the desorber (D) is also fed) with the thermodestruction of the desorbed pollutants, followed by a thermal recovery of the gases subjected to combustion in (R), rapid cooling of the fumes by means of quenching (Q) with water, filtration (G) to separate the powders (13) and acid-base washing (L) of the fumes (14) with a damp scrubber to separate the acid gases and mercury.

A completely purified gaseous stream (20) which undergoes post-heating in (B) before being sent (21) into the atmosphere, leaves the scrubber (L) together with an aqueous stream (22), essentially contaminated by mercury and acid gases, which is sent for specific demercurization treatment (H), from which an acid stream (23) recycled to the extraction step (S) and a stream of mud (24), essentially containing mercury, sent to the dehydration step (U), are discharged.

The aqueous stream (8) leaving (M) is sent to the physico-chemical water treatment step (T) together with the aqueous stream (12) leaving the condenser to precipitate the heavy metals.

Two streams leave (T): a solid stream (15) (mud resulting from the water treatment), which can be subjected to dehydration in (U) and then sent for inertization treatment (Z) together with the powders (13) coming from filtration (G) before being disposed of in a dump, and an aqueous stream (16), which is partly (17) recirculated to the damp scrubber (L), partly (18) sent for quenching (Q) and partly (19) sent to the extraction step of the metals (S).

The following examples provide a better illustration of the present invention but should in no way be considered as limiting its scope.

### EXAMPLES

Table I indicates three types of sediment with the relative physico-chemical characterizations which can be decontaminated with the process of the present invention.

In said Table I the complement of the residue at 105°C is indicative of the humidity degree of the mud and the values in italics are recalculated on the dried product at 105°C from analysis of the sediment as such (TQ).

The sediment analyzed proves to be particularly polluted by organic-chlorinated micropollutants, mainly PCB and PCDDF and by Hg, Pb, Cu and Zn.

The sediment (F6) was subjected to the process of the present invention comprising thermal desorption and extraction of the heavy metals under two different operating conditions.

From examples 1-2 it can be observed that the decontamination process proposed allows a solid material to be recovered with physico-chemical characteristics which would classify it in the most restrictive group A, according to Protocol 93 (L.360/91) relating to the Lagoon of Venice, and consequently entirely suitable for being reused for the reconstruction of lagoon sandbanks.

### EXAMPLE 1

Table II indicates the result of the combined effect of the desorption and solubilization of the metals of the charge F6 described in Table I.

In particular the desorption was carried out in a rotating drum oven having a length of about 3 m and a diameter of 26 cm, with a rotation rate of 2.5 revs/minute and an axis gradient of 1.95%. The oven was heated indirectly to bring the mud at a distance of about 70 cm from the oven outlet to 450°C and subjected to a countercurrent of air. 40 kg of mud were fed to the head of the oven in 5 hours and 15 minutes whereas 7 Nmc/h of air were fed to the tail.

The granulated product (P4) was subjected to analysis and the results are specified in Table II. The removals refer to a dry product at 33%, similar to that of the charge fed.

The results demonstrate a high removal of organic micropollutants, practically complete with respect to aromatic polycyclic hydrocarbons (IPA), higher than 99% for PCB and higher than 97% for dioxines (PCDD/F). The mercury is practically reduced to less than 2 ppm of residue (measured on the mud as such at 88.9% of dry residue) whereas the other heavy metals remain more or less unaltered. Of certain interest is the fact that by effecting the thermal treatment with air, but at a low temperature, the Cr(VI) fraction already present in the original mud does not increase (if evaluated with the same dry residue).

The granulated product (containing 10% of humidity) was subsequently subjected to solubilization of the heavy metals by means of treatment at room temperature with HCl 3N with a liquid/solid ratio equal to 8, and a contact time of the suspension, maintained under light stirring, of 4 hours. The contact time is selected on the basis of the evolution of the pH. After 4 hours it proves to be already stabilized. At the end of the treatment the aqueous solution in excess with respect to that relating to the imbibition of the mud, is separated and analyzed and the fraction of heavy metals removed from the original granulated product is consequently recalculated. The results, indicated in Table II under column P8, show a removal of more than 50% for almost all the metals analyzed with values that exceed 80% for example for Hg, Cu and As.

### EXAMPLE 2

Table III indicates the result of the combined effect of the desorption and solubilization of the metals on the charge F6, described in Table I.

In particular, the desorption was carried out as described in example 1, but with nitrogen as carrier gas. 50 kg of mud were fed to the head of the oven in 7 hours whereas 7 Nmc/h of nitrogen were fed to the tail.

The granulated product was subjected to analysis and the results are specified in Table III under column P7. The results indicate a high removal of the organic micropollutants, practically complete for the aromatic polycyclic hydrocarbons (IPA), more than 98% for the PCB and more than 96% for the dioxines (PCDD/F).

To obtain a higher removal of heavy metals with respect to example 1, the granulated product (containing 10% of humidity) was subsequently subjected to solubilization of the heavy metals by means of treatment at room temperature with HCl 3N with a liquid /solid ratio equal to 8 and contact time of the suspension, maintained under light stirring, of 4 hours, followed by a washing of an hour with an equal volume of water. At the end of the second treatment the aqueous solution in excess with respect to that relating to the imbibition of the mud, is separated and analyzed and the fraction of heavy metals removed from the original granulated product is consequently recalculated. The results, indicated in Table III under column S8+S9, surprisingly show an almost complete removal for all the metals analyzed. The residual levels are compatible with the bottom residues of the environment.

**Table I**

| | | F97 | | F3 | | F6 | |
|---|---|---|---|---|---|---|---|
| Conditioning | | TQ | 105°C | TQ | 105°C | TQ | 105°C |
| residue at 105°C | %w | 34.0 | 100 | 35.9 | 100 | 43 | 100 |
| residue at 900°C | %w | 23.1 | | 21.4 | | 31.3 | |

| Thermal characterization | | | | | | | |
|---|---|---|---|---|---|---|---|
| PCS | cal/g° | | 490 | <500 | | 1575 | |

| meltability in oxydating environment | | | | | | | |
|---|---|---|---|---|---|---|---|
| softening | °C | | 1150 | | | | |
| halfsphere | °C | | 1200 | | | | |
| melting | °C | | 1250 | | | | |
| density | t/m³ | | | 1.23 | | 1.32 | |

| Organic micropollutant analysis | | | | | | | |
|---|---|---|---|---|---|---|---|
| IPA | ppm | 0.6 | | 51.5 | | 71.1 | |
| PCB | ppm | 1.8 | | 9.6 | | 10.4 | |
| PCDD/F (TEQ) | ng/kg | 5584 | | 293 | 816 | 252 | 583 |
| chlorinated solvents | ppm | | | 63.5 | | 69.8 | |

| Analysis of the elements | | | | | | | |
|---|---|---|---|---|---|---|---|
| C | % | | 7.3 | 5.3 | 13.3 | 4.0 | 7.4 |
| H | % | | 0.6 | 7.7 | 1.3 | 6.1 | 0.6 |
| N | % | | 0.4 | <0.5 | <0.5 | <0.5 | <0.5 |
| S | % | | 1.1 | 0.25 | 0.32 | 0.54 | 0.89 |
| Organic Cl | % | | | 0.85 | 2.37 | 0.55 | 1.28 |
| Total Cl | % | | | 1.67 | 4.65 | 1.55 | 3.58 |
| Hg | ppm | 19 | 56 | 27 | 75 | 69 | 160 |
| Pb | ppm | | 244 | 84 | 234 | 91 | 211 |
| Cd | ppm | | 3.6 | 1.2 | 3.3 | 1 | 2 |
| Cu | ppm | | 121 | 71 | 198 | 53 | 123 |
| Cr | ppm | | 96 | 32 | 89 | 37 | 86 |
| Cr(VI) | ppm | | | <5 | | <5 | |
| Zn | ppm | | 541 | 460 | 1281 | 270 | 625 |
| Ni | ppm | | 48 | 18 | 50 | 35 | 81 |
| As | ppm | | 22 | 10 | 28 | 8.6 | 20 |
| Se | ppm | | <5 | <5 | | <5 | |
| Be | ppm | | | <1 | | <1 | |
| Te | ppm | | | <5 | | <5 | |

**Table II**

| | | F6 | P4 | | S8 | % remov. |
|---|---|---|---|---|---|---|
| Conditioning | | TQ | TQ | recalc. | TQ | |
| residue at 900°C | %w | 31.3 | 88.9 | 33.0 | 33.0 | |

| Organic micropollutant analysis | | | | | | |
|---|---|---|---|---|---|---|
| IPA | ppm | 71.1 | <0.01 | | | 100% |
| PCB | ppm | 10.4 | 0.10 | 0.037 | | 100% |
| PCDD/F (TEQ) | ng/kg | 252 | 17 | 6.4 | | 97% |

| Analysis of the elements | | | | | | |
|---|---|---|---|---|---|---|
| C | % | 4.0 | 0.9 | 0.33 | | |
| N | % | <0.5 | <0.5 | | | |
| S | % | 0.54 | 0.70 | 0.26 | | |
| Organic Cl | % | 0.55 | 0.0 | 0.0 | | |
| Total Cl | % | 1.55 | 2.30 | 0.85 | | |
| Hg | ppm | 69 | 1.7 | | 0.4 | 99% |
| Pb | ppm | 91 | 229 | | 25 | 72% |
| Cd | ppm | 1 | 2.4 | | 0.3 | 70% |
| Cu | ppm | 53 | 129 | | 10 | 81% |
| Cr | ppm | 37 | 117 | | 17 | 55% |
| Cr(VI) | ppm | <5 | 6 | | | |
| Zn | ppm | 270 | 714 | | 139 | 49% |
| Ni | ppm | 35 | 99 | | 17 | 52% |
| As | ppm | 8.6 | 27 | | 1.0 | 88% |

**Table III**

| | | F6 | P7 | | S8+S9 | % remov. |
|---|---|---|---|---|---|---|
| Conditioning | | TQ | TQ | recalc. | TQ | |
| residue at 900°C | %w | 31.3 | 86.9 | 33.0 | 33.0 | |

| Organic micropollutant analysis | | | | | | |
|---|---|---|---|---|---|---|
| IPA | ppm | 71.1 | <0.01 | | | 100% |
| PCB | ppm | 10.4 | 0.40 | 0.152 | | 99% |
| PCDD/F (TEQ) | ng/kg | 252 | 21 | 8.0 | | 97% |

| Analysis of the elements | | | | | | |
|---|---|---|---|---|---|---|
| C | % | 4.0 | 0.9 | 0.34 | | |
| N | % | <0.5 | <0.5 | | | |
| S | % | 0.54 | 0.50 | 0.19 | | |
| Organic Cl | % | 0.55 | 0.00 | 0.00 | | |
| Total Cl | % | 1.55 | 2.80 | 1.06 | | |
| Hg | ppm | 69 | 1.2 | | <0.5 | >99% |
| Pb | ppm | 91 | 197 | | 5 | 94% |
| Cd | ppm | <1 | <1 | | | |
| Cu | ppm | 53 | 120 | | <1 | >98% |
| Cr | ppm | 37 | 101 | | 1 | 96% |
| Cr(VI) | ppm | <5 | <5 | | | |
| Zn | ppm | 270 | 399 | | 17 | 94% |
| Ni | ppm | 35 | 71 | | | 96% |
| As | ppm | 8.6 | 26 | | <1 | >88% |

## Claims

1. A process for the decontamination of mud, in particular sea and lagoon sediment, or earth from organic and/or inorganic micropollutants comprising a thermal desorption from the mud or earth of organic micropollutants and volatile metals in an oven at a temperature ranging from 300 to 700°C, obtaining a gaseous stream containing the organic pollutants and volatile metals removed and a residual solid stream, **characterised in that** said thermal desorption is followed by an extraction of the heavy metals from the residual solid stream by means of inorganic acids or chelating compounds in aqueous solution, in one or more steps, by chemically dissolving said heavy metals, obtaining substantially detoxified mud or earth having such characteristics as to enable it to be replaced in the original site.

2. The process according to claim 1, wherein the thermal desorption is carried out in a rotating drum oven with indirect heating.

3. The process according to claim 1, wherein the desorption is carried out at a temperature ranging from 400 to 650°C.

4. The process according to claim 1, wherein the extraction by means of inorganic acids or chelating compounds is followed by one or more washings with water.

5. The process according to claim 1, wherein the inorganic acid is hydrochloric acid.

6. The process according to claim 1, wherein the thermal desorption is preceded by a thermal drying step to concentrate the mud or earth to a dry residue of at least 80% by weight.

7. The process according to claim 6, wherein the drying step is carried out by indirect heating using diathermic oil or vapour.

8. The process according to claim 6, wherein the thermal drying is followed by a sieving and crushing step.

9. The process according to claim 1, wherein the gaseous stream containing organic pollutants and volatile metals generated by the thermal desorption is subjected to post-combustion thermal treatment followed by dedusting and deacidification treatment.

10. The process according to claim 9, wherein in addition to the dedusting and deacidification treatment, a demercurization treatment is also effected.

11. The process according to claim 9, wherein immediately downstream of the post-combustion treatment there is a thermal recovery and/or rapid cooling ("quenching") of the fumes with water.

12. The process according to claim 1, wherein there is an additional step for the treatment of the water coming from the extraction step of the heavy metals and, when present, the drying step according to claim 6, the deacidification step according to claim 9 and aqueous effluents of the process, obtaining process water, which is completely recirculated, and resulting mud in which heavy metals are concentrated.

13. The process according to claim 12, wherein the mud resulting from the water treatment is sent for inertization treatment obtaining stable and chemically inert solid residues.

14. The process according to claims 13 and 9, wherein the resulting mud is sent for inertization treatment together with the powders generated by the dedusting treatment.

15. The process according to claim 10, wherein the demercurization treatment is carried out in a damp scrubber in which the outgoing aqueous stream contaminated by mercury is sent directly to the water treatment step according to claim 12 or is subjected to specific demercurization treatment in which an aqueous stream to be recirculated to the extraction step of the heavy metals is generated together with a stream of mud containing mercury.

## Patentansprüche

1. Verfahren zur Dekontamination von Schlamm, insbesondere von Meer- und Lagunensedimenten, oder von Boden von organischen und/oder anorganischen Mikroverunreinigungen, umfassend:
eine thermische Desorption von organischen Mikroverunreinigungen und flüchtigen Metallen aus dem Schlamm oder dem Boden in einem Ofen bei einer Temperatur im Bereich von 300 bis 700°C, wobei ein gasförmiger Strom, der die entfernten organischen Verunreinigungen und flüchtigen Metalle enthält, und ein fester Reststrom erhalten werden, **dadurch gekennzeichnet, dass** der thermischen Desorption eine Extraktion der Schwermetalle aus dem festen Reststrom mit Hilfe von anorganischen Säuren oder chelatbildenden Verbindungen in wässriger Lösung folgt, in einem oder mehreren Schritten, indem diese Schwermetalle chemisch gelöst werden, wodurch im wesentlichen entgifteter Schlamm oder Boden erhalten wird, der solche Eigenschaften aufweist, dass er an die ursprüngliche Stelle zurückgelegt werden kann.

2. Verfahren gemäß Anspruch 1, worin die thermische Desorption in einem Drehtrommelofen mit indirekter Erwärmung durchgeführt wird.

3. Verfahren gemäß Anspruch 1, worin die Desorption bei einer Temperatur im Bereich von 400 bis 650°C durchgeführt wird.

4. Verfahren gemäß Anspruch 1, worin der Extraktion mit Hilfe von anorganischen Säuren oder chelatbildenden Verbindungen ein oder mehrere Waschvorgänge mit Wasser folgen.

5. Verfahren gemäß Anspruch 1, wobei es sich bei der anorganischen Säure um Salzsäure handelt.

6. Verfahren gemäß Anspruch 1, worin der thermischen Desorption ein Wärmetrocknungsschritt vorausgeht, um den Schlamm oder den Boden auf einen Trockenrückstand von mindestens 80 Gew.-% zu konzentrieren.

7. Verfahren gemäß Anspruch 6, worin der Trocknungsschritt mittels indirektem Erwärmen unter Verwendung von diathermischem Öl oder Dampf durchgeführt wird.

8. Verfahren gemäß Anspruch 6, worin nach dem Wärmetrocknen ein Siebungs- und Zerkleinerungsschritt folgt.

9. Verfahren gemäß Anspruch 1, worin der organische Verunreinigungen und flüchtige Metalle enthaltende, gasförmige Strom, der mittels der thermischen Desorption erzeugt worden ist, einer Nachverbrennungswärmebehandlung unterzogen wird, gefolgt von einer Entstaubungs- und Entsäuerungsbehandlung.

10. Verfahren gemäß Anspruch 9, worin zusätzlich zu der Entstaubungs- und Entsäuerungsbehandlung ferner eine Behandlung zur Entfernung von Quecksilbersubstanzen vorgenommen wird.

11. Verfahren gemäß Anspruch 9, worin unmittelbar stromabwärts der Nachverbrennungsbehandlung eine Wärmerückgewinnung und/oder ein rasches Abkühlen ("Quenchen") der Abgase mit Wasser stattfindet.

12. Verfahren gemäß Anspruch 1, worin ein zusätzlicher Schritt zur Behandlung des Wassers durchgeführt wird, welches aus dem Extraktionsschritt der Schwermetalle, und gegebenenfalls dem Trocknungsschritt gemäß Anspruch 6, dem Entsäuerungsschritt gemäß Anspruch 9 und wässrigen Abflüssen des Verfahrens stammt, wodurch Produktionswasser, das vollständig rezirkuliert wird, und resultierender Schlamm, in dem Schwermetalle angereichert sind, erhalten werden.

13. Verfahren gemäß Anspruch 12, worin der Schlamm, der aus der Wasserbehandlung entsteht, einer Inertisierungsbehandlung zugeführt wird, um stabile und chemisch inerte, feste Rückstände zu ergeben.

14. Verfahren gemäß den Ansprüchen 13 und 9, worin der resultierende Schlamm einer Inertisierungsbehandlung zusammen mit den Pulvern, die durch die Entstaubungsbehandlung erzeugt worden sind, zugeführt wird.

15. Verfahren gemäß Anspruch 10, worin die Behandlung zur Entfernung von Quecksilbersubstanzen in einem Nassabscheider durchgeführt wird, worin der abgehende wässrige Strom, der mit Quecksilber kontaminiert ist, direkt dem Wasserbehandlungsschritt gemäß Anspruch 12 zugeführt wird, oder einer spezifischen Behandlung zur Entfernung von Quecksilbersubstanzen unterzogen wird, bei der ein wässriger Strom, der in den Extraktionsschritt der Schwermetalle rezirkuliert werden soll, zusammen mit einem Strom von Schlamm, welcher Quecksilber enthält, erzeugt wird.

## Revendications

1. Procédé de décontamination de boue, en particulier de sédiments marins ou lagunaires, ou de terre, permettant d'en éliminer des micropolluants organiques et/ou inorganiques, comportant le fait de chasser de la boue ou de la terre les micropolluants organiques et les métaux volatils par désorption thermique dans un four, à une température de 300 à 700 °C, ce qui donne un courant gazeux contenant les polluants organiques et métaux volatils éliminés et un courant de résidus solides,
**caractérisé en ce que** cette opération de désorption thermique est suivie d'une opération dans laquelle on extrait les métaux lourds du courant de résidus solides, à l'aide d'acides inorganiques ou de composés chélateurs en solution aqueuse, en une ou plusieurs étapes, par dissolution chimique de ces métaux lourds, ce qui donne de la terre ou de la boue pratiquement détoxifiée dont les caractéristiques sont telles qu'on peut la remettre en place dans son site d'origine.

2. Procédé conforme à la revendication 1, dans lequel la désorption thermique s'effectue dans un four à tambour rotatif et à chauffage indirect.

3. Procédé conforme à la revendication 1, dans lequel la désorption s'effectue à une température de 400 à 650 °C.

4. Procédé conforme à la revendication 1, dans lequel l'extraction opérée à l'aide d'acides inorganiques ou de composés chélateurs est suivie d'une ou plusieurs opérations de lavage à l'eau.

5. Procédé conforme à la revendication 1, dans lequel l'acide inorganique est de l'acide chlorhydrique.

6. Procédé conforme à la revendication 1, dans lequel la désorption thermique est précédée d'une étape de séchage thermique qui sert à concentrer la terre ou la boue jusqu'à ce qu'elle présente une teneur en matières sèches d'au moins 80 % en poids.

7. Procédé conforme à la revendication 6, dans lequel l'étape de séchage est effectuée par chauffage indirect à l'aide d'huile diathermique ou de vapeur.

8. Procédé conforme à la revendication 6, dans lequel le séchage thermique est suivi d'une étape de broyage et de tamisage.

9. Procédé conforme à la revendication 1, dans lequel le courant gazeux contenant les polluants organiques et les métaux volatils, produit par désorption thermique, est soumis à un traitement thermique de post-combustion, suivi d'un traitement de dépoussiérage et désacidification.

10. Procédé conforme à la revendication 9, dans lequel, en plus du traitement de dépoussiérage et désacidification, on effectue aussi un traitement d'élimination du mercure.

11. Procédé conforme à la revendication 9, dans lequel, immédiatement en aval du traitement de post-combustion, il y a récupération de chaleur et/ou refroidissement rapide ("trempe") des fumées avec de l'eau.

12. Procédé conforme à la revendication 1, dans lequel il y a une étape supplémentaire de traitement des eaux provenant de l'étape d'extraction des métaux lourds, et le cas échéant, de l'étape de séchage mentionnée dans la revendication 6 et de l'étape de désacidification mentionnée dans la revendication 9, ainsi que des effluents aqueux du procédé, ce qui donne de l'eau de procédé, qui est recyclée en totalité, et une boue résultante dans laquelle les métaux lourds sont concentrés.

13. Procédé conforme à la revendication 12, dans lequel la boue résultante issue du traitement des eaux est envoyée subir un traitement d'inertisation, qui donne des résidus solides stables et chimiquement inertes.

14. Procédé conforme aux revendications 13 et 9, dans lequel la boue résultante et les poudres issues du traitement de dépoussiérage sont envoyées ensemble subir le traitement d'inertisation.

15. Procédé conforme à la revendication 10, dans lequel le traitement d'élimination du mercure est effectué dans un laveur, et le courant aqueux contaminé par du mercure qui en sort est envoyé directement subir le traitement d'eau mentionné dans la revendication 12 ou est soumis à un traitement spécifique d'élimination du mercure, qui donne un courant aqueux, que l'on recycle dans l'étape d'extraction des métaux lourds, et un courant de boue contenant du mercure.
